# EUROPEAN PATENT APPLICATION

(11) **EP 4 516 096 A1**
(43) Date of publication of application: **05.03.2025**
(21) Application number: 23796428.3
(22) Date of filing: 26.04.2023
(51) Int. Cl.: A01K 31/00, B08B 3/02

(54) **LIQUID SPRAY DEVICE**

(30) Priority: 26.04.2022 JP 2022072307
(71) Applicant: Kohshin Engineering Co., Ltd., Ama-city, Aichi 497-0016 (JP)
(72) Inventor: SUMIYA, Hiroki, Ama-city Aichi 4970016 (JP); SUMIYA, Kazunori, Ama-city Aichi 4970016 (JP)
(74) Representative: Müller-Boré & Partner Patentanwälte PartG mbB
(86) International application number: PCT/JP2023/016442
(87) International publication number: WO 2023/210688

(57) **Abstract**

A liquid ejection apparatus 1 of the present invention includes a nozzle 2 that ejects a liquid toward an object 100, a rotation mechanism 3 that holds the nozzle 2 and rotates the nozzle 2 so that the liquid ejected from the nozzle 2 advances while drawing a circle, a support device 4 that supports the rotation mechanism 3, and a self-propelled unit 5 on which the support device 4 is mounted. The liquid ejection apparatus 1 includes a swing mechanism 3 provided between the rotation mechanism 3 and the support device 4 and capable of swinging the nozzle 2 with the rotation mechanism 3 side as a fulcrum.

## Description

### TECHNICAL FIELD

The present invention relates to a liquid ejection apparatus.

### BACKGROUND ART

In the related art, a self-propelled cleaning device that ejects cleaning water to sequentially clean a barn is known (for example, Patent Literature 1). This type of cleaning device includes a self-propelled unit that can self-propel, a nozzle that ejects cleaning water, and a displacement mechanism that displaces a position of the nozzle in order to adjust a range in which cleaning water ejected from the nozzle reaches. The displacement mechanism includes a vertical displacement mechanism that displaces a height position of the nozzle in a vertical direction, and a rotation mechanism that rotates the nozzle so that cleaning water ejected from the nozzle advances while drawing a circle.

The cleaning device is used, for example, for cleaning a multistage cage poultry house in which cages housing chickens are stacked in a plurality of stages. In the multistage cage poultry house, a large number of cages are usually disposed in a row not only in the vertical direction but also in the lateral direction (horizontal direction).

In a case where such a multistage cage poultry house is cleaned by the cleaning device described above, first, the cleaning of the uppermost cage row (cage row) is performed. At this time, the vertical displacement mechanism adjusts the height position of the nozzle so that the cleaning water from the nozzle hits the uppermost cage row, and the rotation mechanism rotates the nozzle so that the cleaning water ejected from the nozzle reaches a wide range. At this time, in order to sequentially clean the uppermost cage row in the lateral direction, a self-propelled unit equipped with a nozzle and the like travels at a predetermined speed in front of the multistage cage poultry house.

### CITATION LIST

### PATENT LITERATURE

Patent Literature 1: JP 2008 043250 A

### TECHNICAL PROBLEM

In a conventional cleaning device, cleaning water is ejected while a nozzle is rotated by a rotation mechanism in a state where a height position of the nozzle is adjusted to a predetermined height position and then fixed to the height position. That is, a range where cleaning water ejected from the nozzle reaches is substantially determined by a rotational operation of the rotation mechanism. For example, in the case of the conventional cleaning device described above, in order to clean one cage row, it is necessary to reciprocate the nozzle one time so as to passes through in front of the multistage cage poultry house (cage row) at its front. In this case, a range that the cleaning water ejected from the nozzle can reach is narrower than the width of one cage row in the height direction.

Therefore, in a liquid ejection apparatus such as a conventional cleaning device, a range that the liquid ejected from a nozzle reaches is limited, which has been a problem.

### SUMMARY OF INVENTION

An object of the present invention is to provide a self-propelled liquid ejection apparatus capable of spreading cleaning water ejected from a nozzle over a wide range.

### SOLUTION TO PROBLEM

The solution to the problem is as follows. That is,
<1> A liquid ejection apparatus including a nozzle that ejects a liquid toward an object, a rotation mechanism that holds the nozzle and rotates the nozzle such that the liquid ejected from the nozzle advances in a circular motion, a support device that supports the rotation mechanism, a self-propelled unit on which the support device is mounted, and a swing mechanism disposed between the rotation mechanism and the support device and being capable of swinging the nozzle with the rotation mechanism as a fulcrum.
<2> The liquid ejection apparatus according to Item <1>, wherein the swing mechanism swings the nozzle together with the rotation mechanism such that the nozzle moves down from an upper side to a lower side and moves up from the lower side to the upper side repeatedly.
<3> The liquid ejection apparatus according to Item <1> or <2>, wherein the support device includes a first support portion that supports the rotation mechanism via the swing mechanism and is extendable and retractable in a horizontal direction so as to be movable in a direction in which the nozzle approaches the object and in a direction in which the nozzle moves away from the object.
<4> The liquid ejection apparatus according to Item <3>, wherein the support device includes a second support portion that extends upward from the self-propelled unit and supports the first support portion such that the first support portion is capable of moving up and down in a vertical direction.
<5> A liquid ejection apparatus including a nozzle that ejects a liquid toward an object, a rotation mechanism that holds the nozzle and rotates the nozzle such that the liquid ejected from the nozzle advances in a circular motion, a support device that supports the rotation mechanism, a self-propelled unit on which the support device is mounted, wherein the support device includes a first support portion that supports the rotation mechanism and is extendable and retractable in a horizontal direction so as to be movable in a direction in which the nozzle approaches the object and in a direction in which the nozzle moves away from the object.
<6> The liquid ejection apparatus according to Item <5>, wherein the support device includes a second support portion that extends upward from the self-propelled unit and supports the first support portion such that the first support portion is capable of moving up and down in a vertical direction.
<7> A liquid ejection apparatus including a nozzle that ejects a liquid toward an object, a rotation mechanism that holds the nozzle and rotates the nozzle such that the liquid ejected from the nozzle advances win a circular motion, a support device that supports the rotation mechanism, and a self-propelled unit on which the support device is mounted, wherein the support device extends upward from the self-propelled unit, and supports the rotation mechanism such that the nozzle held by the rotation mechanism is capable of moving up and down in a vertical direction.

### ADVANTAGEOUS EFFECTS OF THE INVENTION

According to the present invention, it is possible to provide a self-propelled liquid ejection apparatus capable of spreading cleaning water ejected from a nozzle over a wide range.

### BRIEF DESCRIPTION OF DRAWINGS

Fig. 1 is an explanatory diagram illustrating a schematic configuration of a liquid ejection apparatus according to the first embodiment of the present invention together with a multistage cage poultry house.
Fig. 2 is a side view of the liquid ejection apparatus in a state where the second support portion retracts in the vertical direction to the maximum extent.
Fig. 3 is a side view of the liquid ejection apparatus in a state in which the second support portion extends maximally in the vertical direction.
Fig. 4 is a rear view of the first support portion.
Fig. 5 is a plan view of a first support portion in a state in which a length of the first support portion is minimized.
Fig. 6 is a plan view of a first support portion in a state in which a length of the first support portion is maximized.
Fig. 7 is a cross-sectional view of the rotation mechanism.
Fig. 8 is a cross-sectional view of the rotation mechanism.
Fig. 9 is a cross-sectional view of the rotation mechanism.
Fig. 10 is an explanatory view schematically illustrating a nozzle that rotates by a rotation mechanism while ejecting a liquid (cleaning water).
Fig. 11 is an enlarged plan view of a distal end of a first support portion.
Fig. 12 is an explanatory view schematically illustrating a swing operation of the swing mechanism.
Fig. 13 is an explanatory view schematically illustrating the movement of the nozzle in a case where the nozzle is swung down from the upper side to the lower side by the swing mechanism while being rotated by the rotation mechanism.
Fig. 14 is an explanatory view schematically illustrating a stroke of a nozzle that moves based on a movement condition.
Fig. 15 is an explanatory diagram schematically illustrating the content of cleaning an object using the liquid ejection apparatus according to the second embodiment.
Fig. 16 is an explanatory diagram schematically illustrating the content of cleaning an object using the liquid ejection apparatus according to the third embodiment.
Fig. 17 is an explanatory diagram schematically illustrating the content of cleaning an object using the liquid ejection apparatus according to the fourth embodiment.

### DESCRIPTION OF EMBODIMENTS

### <First embodiment>

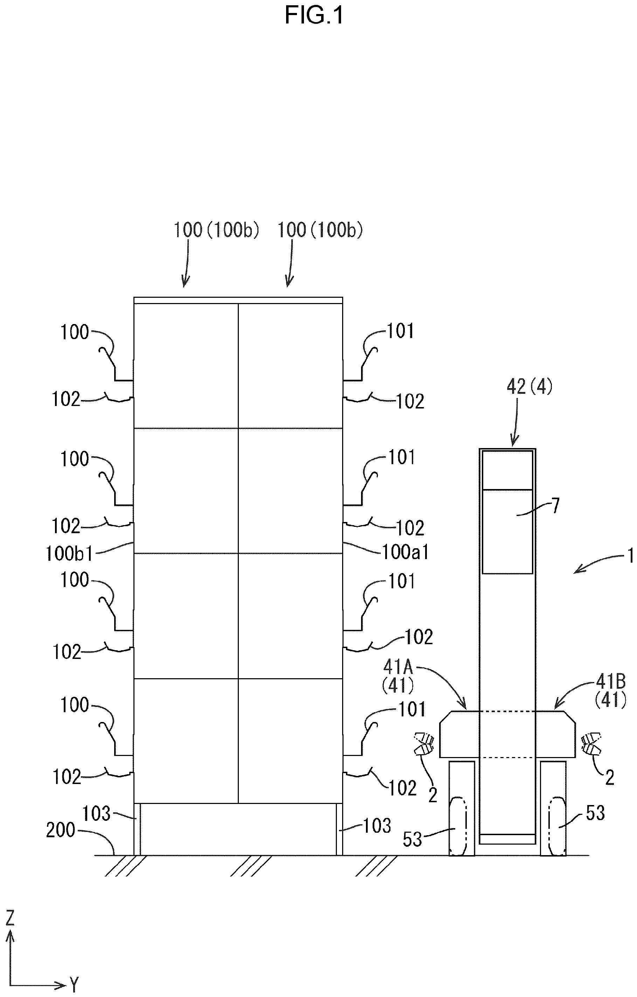

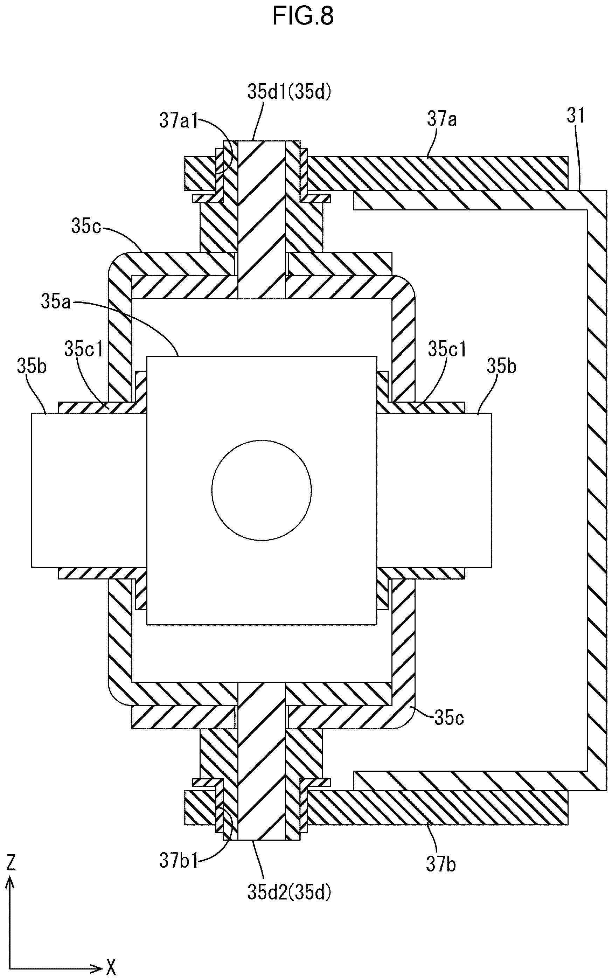

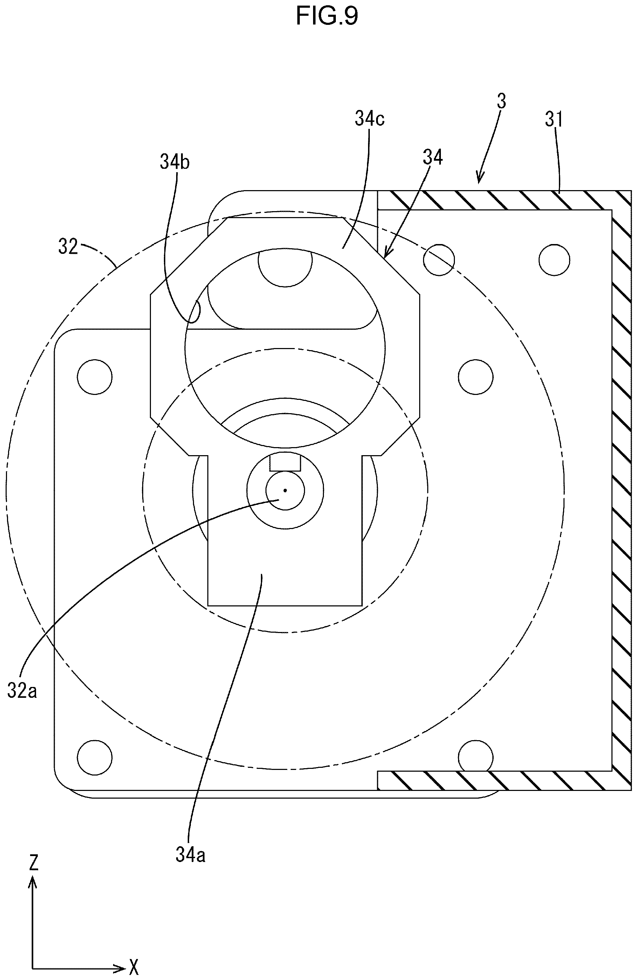

Hereinafter, a self-propelled liquid ejection apparatus 1 according to the first embodiment of the present invention will be described with reference to Figs. 1 to 14. Fig. 1 is an explanatory diagram illustrating a schematic configuration of a liquid ejection apparatus 1 according to the first embodiment of the present invention together with a multistage cage poultry house 100. The liquid ejection apparatus 1 of the present embodiment is a self-propelled device (cleaning device) that ejects cleaning water (an example of a liquid) to a multistage cage poultry house (an example of a barn) 100 as an object to clean the multistage cage poultry house 100.

Here, first, the multistage cage poultry house 100 will be briefly described. In the multistage cage poultry house 100, cages housing chickens are stacked in a plurality of stages (Here, four stages). The multistage cage poultry house 100 is installed on a floor surface 200 in a building. In Fig. 1, two multistage cage poultry houses 100 (100a, 100b) are shown disposed back-to-back. In Fig. 1, one multistage cage poultry house 100 shown on the right may be referred to as a "multistage cage poultry house 100a" and the other multistage cage poultry house 100 shown on the left may be referred to as a "multistage cage poultry house 100b".

The multistage cage poultry house 100 has a structure in which rows (cage row) including a large number (a plurality of) of cages disposed in the lateral direction (horizontal direction) are stacked in a plurality of stages (here, four stages) in the vertical direction when viewed from the front. In Fig. 1, the front 100a1 of one multistage cage poultry house 100a disposed on the right side is shown on the right side of Fig. 1, and the front 100b1 of the other multistage cage poultry house 100b disposed on the left side is shown on the left side of Fig. 1.

In such a multistage cage poultry house 100, a plurality of cages (small rooms) is disposed in a matrix as a whole when viewed from the front. Each of the small rooms accommodates a plurality of (for example, 4 to 10) chickens. The multistage cage poultry house 100 is usually cleaned using the liquid ejection apparatus 1 of the present embodiment in a state where no chicken is accommodated in the cage.

On the front side of the multistage cage poultry house 100, a feeder pan (feed gutter) 101 for feeding and an egg receiving portion 102 for receiving eggs laid by chickens are provided for cages (that is, the cage row) in each stage. The feeder pan (feed gutter) 101 is installed so as to pass through in front of cages (small rooms) disposed in a row in a horizontal direction in each stage of the multistage cage poultry house 100. Such a feeder pan (feed gutter) 101 is disposed at a position slightly lower than the central position in the vertical direction when the cage of each stage is viewed from the front. The egg receiving portion 102 is also installed so as to passes through in front of each cage in each stage. Such an egg receiving portion 102 is located below the feeder pan (feed gutter) 101 and is provided so as to continue to the floor of each cage. There are legs 103 in the lower part of each of the stepped cage houses 100, and the multistage cage poultry houses 100 are erected on the floor surface 200 using the legs 103.

Next, the liquid ejection apparatus 1 will be described with reference to the drawings. Fig. 1 illustrates a back face (rear face) of the liquid ejection apparatus 1. The liquid ejection apparatus 1 is disposed side by side with the multistage cage poultry house 100 in front of the front 100a1 of the multistage cage poultry house 100a. The liquid ejection apparatus 1 is disposed in front of the front 100a1 of the multistage cage poultry house 100a so that the front-rear direction coincides with the left-right direction of the multistage cage poultry house 100.

Such a liquid ejection apparatus 1 mainly includes a nozzle 2, a rotation mechanism 3, a support device 4, a self-propelled unit 5, a swing mechanism 6, and a control device 7. As will be described later, the support device 4 includes a first support portion 41 that is extendable and retractable in the horizontal direction, and a second support portion 42 that can raise and lower the first support portion 41 in the vertical direction.

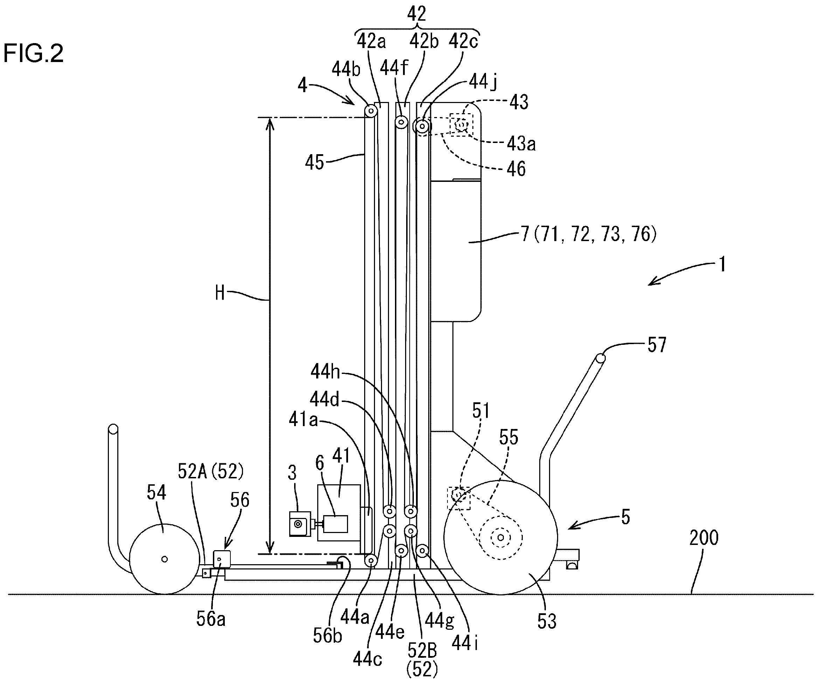

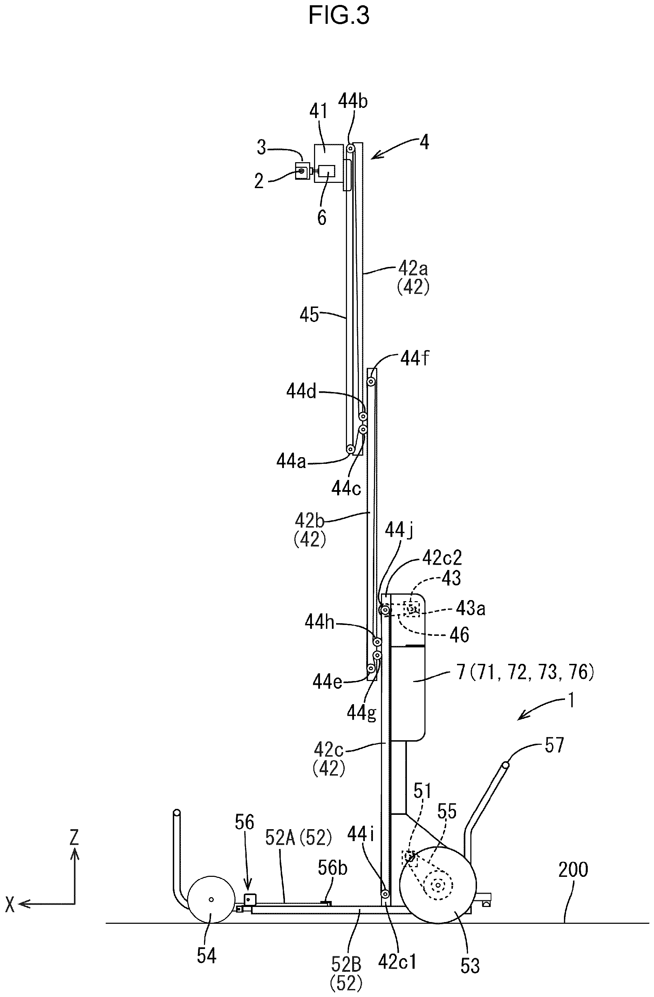

Fig. 2 is a side view of the liquid ejection apparatus 1 in a state where the second support portion 42 retracts in the vertical direction to the maximum extent, and Fig. 3 is a side view of the liquid ejection apparatus 1 in a state where the second support portion 42 extends in the vertical direction to the maximum extent. Note that the front (front face) of the liquid ejection apparatus 1 is disposed on the left side of Figs. 2 and 3, and the back face (rear face) of the liquid ejection apparatus 1 is disposed on the right side of Figs. 2 and 3. Figs. 2 and 3 illustrate a left side face of the liquid ejection apparatus 1.

The self-propelled unit 5 is configured to linearly reciprocate along a direction (that is, the direction in which the cage row extends) in which the plurality of cages is horizontally disposed while being disposed at the multistage cage poultry house 100 in front of the front 100a1 of the multistage cage poultry house 100a. Such a self-propelled unit 5 is configured to be self-propelled by the driving force of a drive motor 51. The self-propelled unit 5 includes a chassis 52 extending in the front-rear direction on which the drive motor 51 and the like are mounted, the drive wheels 53 disposed on each of the left and right sides on the rear side of the chassis 52, and the free wheel 54 disposed on each of the left and right sides on the front side of the chassis 52.

The chassis 52 mainly includes a front chassis portion 52A disposed on the front side and a rear chassis portion 52B disposed on the rear side. The above-described free wheel 54 is rotatably attached to the front chassis portion 52A. On the rear chassis portion 52B, the drive motor 51 and the like are mounted, and the drive wheel 53 that rotates by a driving force of the drive motor 51 is attached to. An annular chain 55 is hooked between an output shaft of the drive motor 51 and a sprocket attached to the drive wheel 53, and an output (driving force) of the drive motor 51 is transmitted to the drive wheel 53 via the chain 55.

The front chassis portion 52A is provided with a steering mechanism 56 including a rack, a pinion, a steering motor 56a, and the like. The front chassis portion 52A and the rear chassis portion 52B are connected via a steering fulcrum shaft 56b. By driving the steering motor 56a, the front chassis portion 52A is allowed to move to the right side or the left side with the steering fulcrum shaft 56b as a center. Therefore, the self-propelled unit 5 can appropriately adjust the traveling direction by the operation of the steering mechanism 56. The chassis 52(for example, front side, rear side, left side, right side, and the like of chassis 52) of the self-propelled unit 5 is provided with a plurality of detection sensors that detect distances to surrounding obstacles and objects (such as the multistage cage poultry house 100). Using the output results from these detection sensors, the self-propelled unit 5 is allowed to move along a predetermined path while avoiding contact with an object or the like.

Such traveling of the self-propelled unit 5 is controlled by a traveling control unit 71 included in the control device 7. The traveling control unit 71 controls driving of the drive motor 51 and the steering motor 56a. The control device 7 includes a central processing unit (CPU), a random access memory (RAM), a storage unit, and the like. The CPU of the control device 7 reads the program stored in the storage unit, develops the program in the work area of the RAM, and executes various processes according to the developed program. The storage unit stores programs executed by the CPU as appropriate, data necessary for various processes, and the like. The storage unit includes a physical drive such as a memory or a hard disk drive. The control device 7 further includes an input unit (operation panel) that receives an instruction from an operator to the liquid ejection apparatus 1.

The route on which the self-propelled unit 5 travels, the traveling speed, and the like are input to the traveling control unit 71 using an input unit included in the control device 7. Note that a handle 57 used in a case where the liquid ejection apparatus 1 is manually moved is provided on the rear side of the chassis 52 included in the self-propelled unit 5.

As illustrated in Figs. 2 and 3, the support device 4 including the first support portion 41 and the second support portion 42 is provided on the rear chassis portion 52B of the self-propelled unit 5.

The first support portion 41 is extendable and retractable in the horizontal direction so as to be movable in a direction in which the nozzle 2 approaches the object and in a direction in which the nozzle 2 moves away from the object. The first support portion 41 supports the rotation mechanism 3 via the swing mechanism 6. Details of the first support portion 41 will be described later.

The second support portion 42 is erected on the self-propelled unit 5, and supports the first support portion 41 so that the first support portion 41 is capable of being raised and lowered in the vertical direction. The second support portion 42 is extendable and retractable in the vertical direction, and is erected on the rear chassis portion 52B. The second support portion 42 includes a first displacement portion 42a, a second displacement portion 42b, and a fixing portion 42c.

The fixing portion 42c has a plate shape extending in the vertical direction, and a lower end 42c1 thereof is fixed to the rear chassis portion 52B. On the back side of the fixing portion 42c, the elevating motor 43 used when the first support portion 41 is raised or lowered is provided.

The first displacement portion 42a and the second displacement portion 42b both have a plate shape extending in the vertical direction, and are set to have substantially the same size (length or the like) as the fixing portion 42c. The second displacement portion 42b is disposed parallel to the fixing portion 42c at the front face of the fixing portion 42c, and the first displacement portion 42a is disposed parallel to the second displacement portion 42b and the fixing portion 42c at the front face of the second displacement portion 42b. That is, the first displacement portion 42a, the second displacement portion 42b, and the fixing portion 42c constituting the first support portion 41 are disposed in parallel to each other from the front side to the rear side in this order. Further, the first support portion 41 is disposed on the front face of the first displacement portion 42a in a state of being able to extendable and retractable in the horizontal direction. The first support portions 41 are provided on the respective left and right sides with the second support portion 42 interposed therebetween so as to move in opposite directions to each other.

The first displacement portion 42a, the second displacement portion 42b, and the fixing portion 42c constituting the second support portion 42 are provided with a plurality of gears (sprockets) 44. Specifically, gears 44a and 44b are provided on the lower end side and the upper end side, respectively, at the front face of the first displacement portion 42a. On the back side of the first displacement portion 42a, two gears 44c and 44d are provided side by side in the vertical direction on the lower end side.

Further, gears 44e and 44f are provided on a lower end side portion and an upper end side portion, respectively, of the side end face of the second displacement portion 42b extending in the vertical direction, respectively. Further, two gears 44g and 44h are provided at the lower end of the back face of the second displacement portion 42b. Further, gears 44i and 44j are provided on a lower end side portion and an upper end side portion, respectively, of the side end face of the fixing portion 42c extending in the vertical direction.

One chain 45 connected in an annular shape (loop shape) as a power transmission means is hooked on these gears 44. In the chain 45, one end hooked on the gear 44b is connected to the first support portion 41 from above, and the other end hooked on the gear 44a is connected to the first support portion 41 from below. That is, the chain 45 is connected in one annular shape with the first support portion 41 interposed therebetween. A gear (sprocket) 43a is fixed to an output shaft of the elevating motor 43, and one chain 46 connected in an annular shape (loop shape) is hooked on the gear 43a and a gear 44j provided at an upper end of the fixing portion 42c.

For example, in a case where the nozzle 2 and the like supported by the first support portion 41 are moved (raised and lowered) in the vertical direction within the range of the predetermined height H as illustrated in Fig. 2, the second support portion 42 is in the most retracted state in the vertical direction. At this time, when the output (rotation) of the elevating motor 43 is transmitted to the gear 44j via the chain 46, the output is transmitted to the first support portion 41 via the chain 45 hooked on the gear 44j, and the nozzle 2 and the like supported by the first support portion 41 are raised and lowered. For example, when the output shaft of the elevating motor 43 rotates in one direction, the chain 46 is pulled in one direction so that the first support portion 41 rises. On the other hand, when the output shaft of the elevating motor 43 rotates in the opposite direction, the chain 46 is pulled in the opposite direction so that the first support portion 41 descends.

In a case where the nozzle 2 and the like supported by the first support portion 41 are disposed at a position higher than the predetermined height H illustrated in Fig. 2, the height (length) of the second support portion 42 in the vertical direction is appropriately adjusted. For example, in the support device 4 in the state illustrated in Fig. 2, when the elevating motor 43 is operated to raise the first support portion 41, a stopper 41a provided at the back face of the first support portion 41 contacts a gear 44b at the upper end of the first displacement portion 42a. Thereafter, when the chain 45 is pulled by the operation of the elevating motor 43, the first displacement portion 42a rises together with the first support portion 41. Thereafter, when the chain 45 is further pulled by the operation of the elevating motor 43, the second displacement portion 42b rises. Then, as illustrated in Fig. 3, the first displacement portion 42a and the second displacement portion 42b of the second support portion 42 are raised, and as a result, the nozzle 2 and the like supported by the first support portion 41 are carried to the highest position. The operation of the second support portion 42 in the support device 4 is controlled by a support device control unit 72 included in the control device 7.

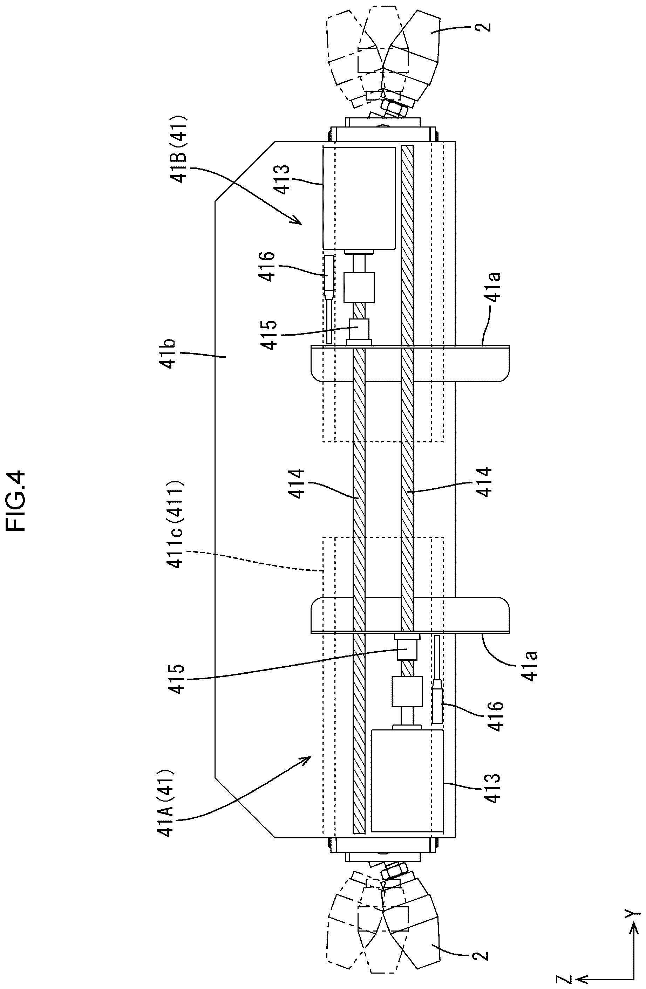

Fig. 4 is a rear view of the first support portion 41. The first support portion 41 is configured to be extendable and retractable in the horizontal direction so as to be movable in a direction in which the nozzle 2 approaches the object (multistage cage poultry house 100) and in a direction in which the nozzle 2 moves away from the object (multistage cage poultry house 100). In the case of the present embodiment, as illustrated in Fig. 4 and the like, one first support portion 41 is provided on each of the left and right sides. For convenience of description, when viewed from the back side, the portion disposed on the left side may be referred to as a "first support portion 41A", and the portion disposed on the right side may be referred to as a "first support portion 41B". The first support portion 41A and the first support portion 41B are attached to the second support portion 42 via a main body 41b. The main body 41b has a shape extending left and right. Two stoppers 41a corresponding to the first support portion 41A and the first support portion 41B are provided at the back face of the main body 41b.

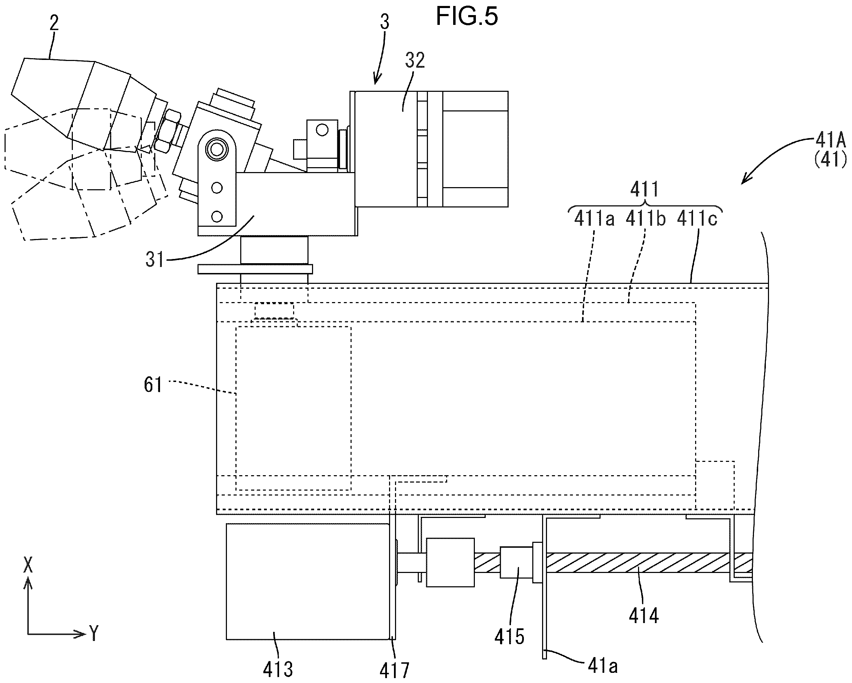

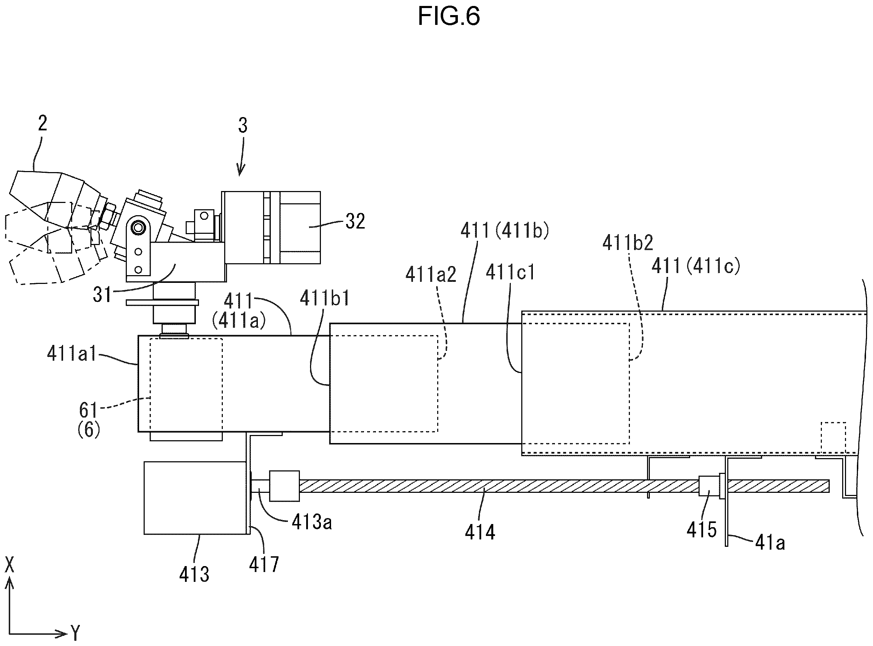

The first support portion 41A and the first support portion 41B are attached to the left and right positions, respectively, but have the same basic structure. Therefore, here, the first support portion 41A disposed on the left side will be described as an example. Fig. 5 is a plan view of the first support portion 41A in a state in which the length retracts the most, and Fig. 6 is a plan view of the first support portion 41A in a state in which the length extends the most. In Figs. 5 and 6, the main body 41b and the like are omitted for convenience of description. The first support portion 41A is configured to be extendable and retractable in the horizontal direction (left-right direction) using a so-called sliding screw. The first support portion 41A includes an arm portion 411, a sliding motor 413, a screw shaft 414, a nut portion 415, and a proximity sensor 416.

The arm portion 411 includes a first slide arm portion 411a having a rectangular tube shape extending in the left-right direction, a second slide arm portion 411b having a rectangular tube shape capable of accommodating the first slide arm portion 411a therein and extending in the left-right direction, and a fixed arm portion 411c having a rectangular tube shape capable of accommodating the second slide arm portion 411b therein and fixed to the main body 41b (see Fig. 4). As illustrated in Fig. 6, in the extended state, in the arm portion 411, the first slide arm portion 411a, the second slide arm portion 411b, and the fixed arm portion 411c are disposed in this order from the distal end toward the rear end (base portion). A motor 61 included in the swing mechanism 6 is attached to the distal end 411a1 of the first slide arm portion 411a. The sliding motor 413 is fixed to the first slide arm portion 411a via a fixing metal fitting 417. The rear end 411a2 of the first slide arm portion 411a is accommodated inside the distal end 411b1 of the second slide arm portion 411b. Although the distal end 411b1 of the second slide arm portion 411b is exposed to the outside, the rear end 411b2 of the second slide arm portion 411b is accommodated in the fixed arm portion 411c.

The rod-like screw shaft 414 around which a male screw is formed is fixed to an output shaft 413a of the sliding motor 413. Then, a cylindrical nut portion 415 in which a female screw is formed on an inner peripheral face is attached to the screw shaft 414 so as to be externally fitted. The nut portion 415 is fixed to the stopper 41a. The stopper 41a is attached to the fixed arm portion 411c together with the main body 41b (not illustrated). The stopper 41a is formed by processing a plate-shaped metal fitting into an L shape. When the output shaft 413a of the sliding motor 413 rotates in one direction, the arm portion 411 operates to extend, and when the output shaft 413a of the sliding motor 413 rotates in the opposite direction, the arm portion 411 operates to retract. The operation of the first support portion 41 in the support device 4 is controlled by the support device control unit 72 included in the control device 7. In addition, the initial state of the arm portion 411 (the state in which the length of the arm portion 411 is most retracted) is grasped using the output result by the proximity sensor 416 that detects approach of the sliding motor 413.

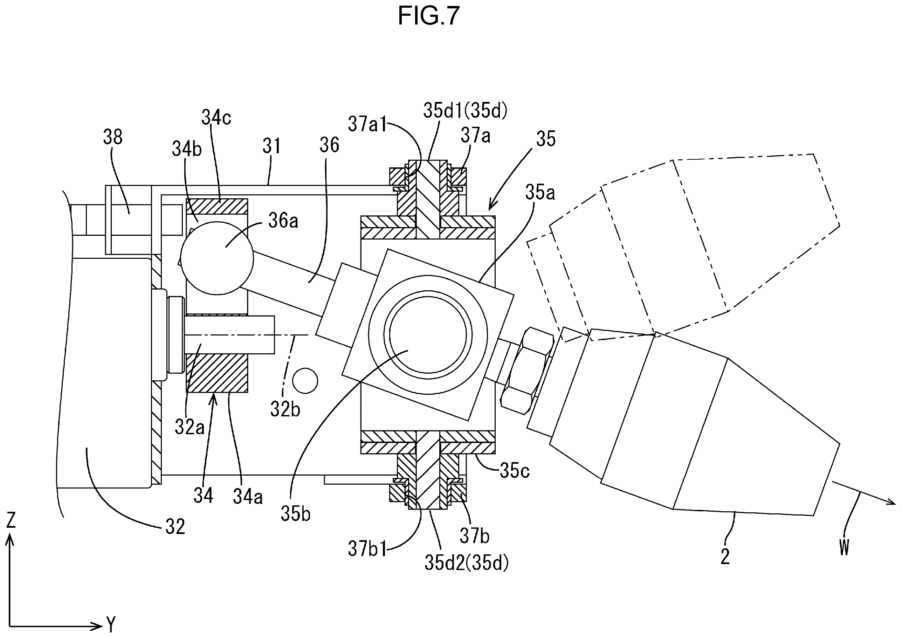

The rotation mechanism 3 is a mechanism that holds the nozzle 2 and rotates the nozzle 2 so that the liquid ejected from the nozzle 2 advances while drawing a circle. Figs. 7 to 9 are cross-sectional views of the rotation mechanism. The rotation mechanism 3 mainly includes a housing 31, a motor 32, a crank 34, a holding portion 35, and an extension portion 36.

The housing 31 fixes the motor 32 while accommodating the crank 34, the holding portion 35, and the like. The motor 32 is used to rotate the nozzle 2, and the crank 34 is fixed to an output shaft 32a thereof. The crank 34 has a base portion 34a fixed to the output shaft 32a and a distal end portion 34c extending outward from the base portion 34a and including a spherical bearing 34b therein. When the output shaft 32a rotates, the crank 34 rotates together with the output shaft 32a about the base portion 34a.

The holding portion 35 is a portion that holds the nozzle 2 in a rotatable state. Such a holding portion 35 includes a fixing portion 35a that fixes the rear end of the nozzle 2, a pair of shaft portions 35b extending in the horizontal direction from the fixing portion 35a, a main body 35c that includes a bearing portion 35c1 that receives each shaft portion 35b and surrounds the fixing portion 35a, and a pair of shaft portions 35d extending in the vertical direction from the main body 35c.

The fixing portion 35a fixes the rear end of the nozzle 2 in a state where a liquid (cleaning water or the like) can be ejected. The pair of shaft portions 35b is provided to extend in the horizontal direction from the fixing portion 35a, and is rotatably received by the bearing portion 35c1 provided in the main body 35c. Therefore, the fixing portion 35a can rotate about the shaft portion 35b. The main body 35c is provided with the pair of shaft portions 35d. One shaft portion 35d is a shaft portion 35d1 extending upward, and the other shaft portion 35d is a shaft portion 35d2 extending downward. One shaft portion 35d1 extending upward is rotatably attached to a bearing portion 37a1 included in a plate-like attachment portion 37a fixed to an upper portion of the housing 31. The other shaft portion 35d2 extending downward is rotatably attached to a bearing portion 37b1 included in a plate-like attachment portion 37b fixed to the lower portion of the housing 31. Therefore, the main body 35c can rotate about the shaft portion 35d.

The extension portion 36 is a rod-shaped portion extending from the holding portion 35 toward the crank 34. The distal end of the extension portion 36 is fixed to the fixing portion 35a of the holding portion 35. A spherical locking portion 36a is provided at the rear end of the extension portion 36. The locking portion 36a is received by the spherical bearing 34b included in the crank 34.

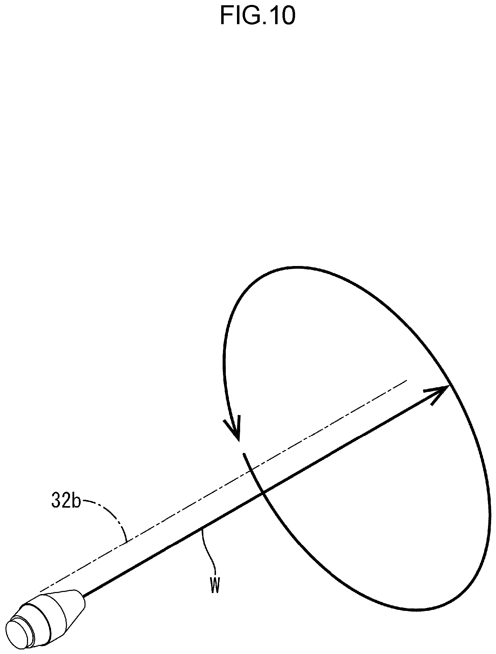

Fig. 10 is an explanatory view schematically illustrating the nozzle 2 rotated by the rotation mechanism 3 while ejecting a liquid (cleaning water) W. In the rotation mechanism 3 having each configuration as described above, when the output shaft 32a of the motor 32 rotates, the nozzle 2 rotates about the axis 32b of the output shaft 32a while forming a predetermined ejection angle with respect to the axis 32b. As a result, as illustrated in Fig. 10, the liquid (cleaning water) W ejected from the nozzle 2 travels toward the object while drawing a circle. Fig. 10 illustrates a state in which only rotation mechanism 3 is operated to eject the liquid (cleaning water) W from the nozzle 2.

The rotational operation of the rotation mechanism 3 is controlled by a control unit 73 for the rotation mechanism 3 included in the control device 7. Further, the rotational position of the nozzle 2 is grasped using the output result by a proximity sensor 38 that detects the position of the crank 34. The proximity sensor 38 is provided above the motor 32.

The nozzle 2 ejects a liquid (cleaning water) toward an object (multistage gauge poultry house 100). The nozzle 2 can rotate together with the rotational operation of the rotation mechanism 3 while being held by the holding portion 35 of the rotation mechanism 3. As the nozzle 2, a known nozzle may be used, and for example, a nozzle that ejects cleaning water (liquid) straight (linearly) may be used, or a nozzle that ejects cleaning water by rotating an ejection port of the nozzle 2 so as to draw a circle smaller than a circle by the rotation mechanism 3 independently of the rotation mechanism 3. Cleaning water ejected from the nozzle 2 may be pressurized using a known pump mechanism or the like. That is, high-pressure cleaning water may be ejected from the nozzle 2. One end of a hose for supplying cleaning water (liquid) to the nozzle 2 is connected to a rear end of the nozzle 2 (opposite to the ejection port). The other end of the hose is connected to a supply source of cleaning water (liquid) via a pump mechanism or the like.

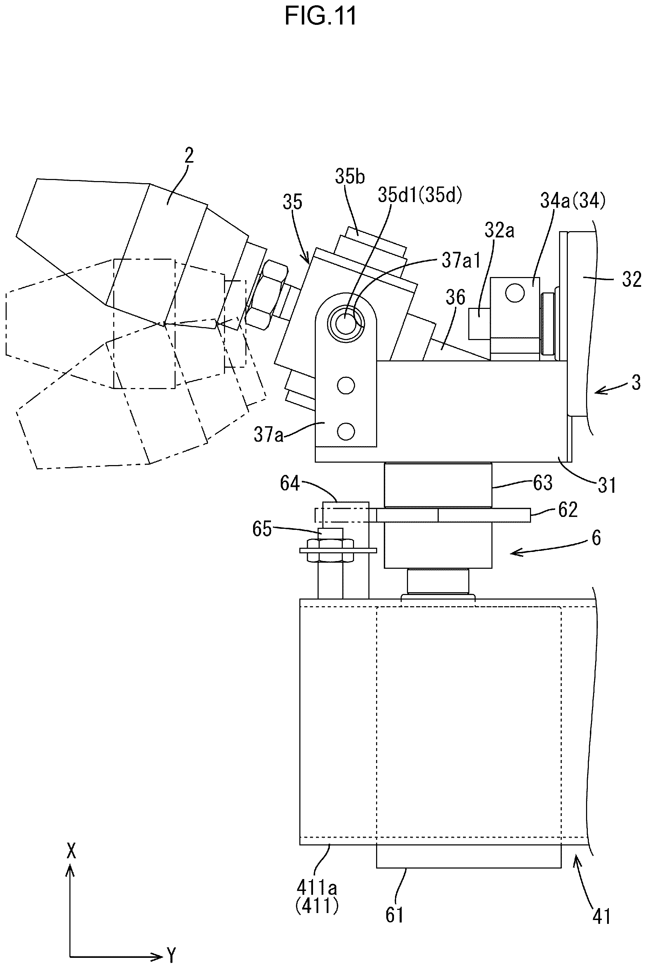

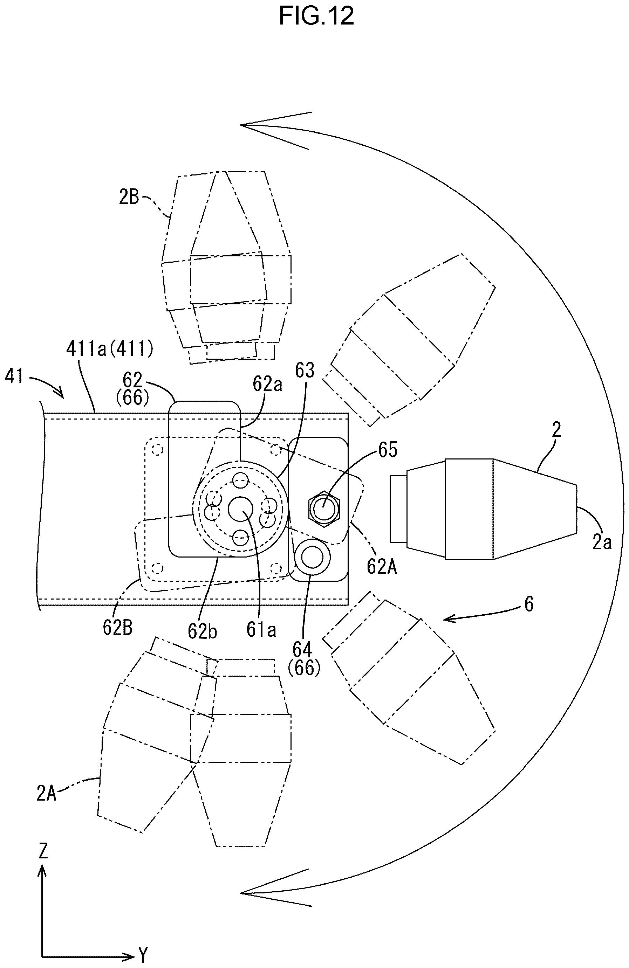

The swing mechanism 6 is provided between the rotation mechanism 3 and the support device 4, and is a mechanism capable of swinging the nozzle 2 with the rotation mechanism 3 as a fulcrum (swing fulcrum). In the case of the present embodiment, the swing mechanism 6 swings the nozzle 2 together with the rotation mechanism 3 in a direction in which the nozzle 2 is swung down from the upper side to the lower side and in a direction in which the nozzle 2 is swung up from the lower side to the upper side. Fig. 11 is an enlarged plan view of the distal end of the first support portion 41, and Fig. 12 is an explanatory view schematically illustrating the swing operation of the swing mechanism 6. As illustrated in Figs. 11 and 12, the swing mechanism 6 mainly includes a motor 61, a coupling portion 63, and a swing restricting portion 66 (rotating plate 62, locking portion 64).

The motor 61 is for the swing mechanism 6, and swings the nozzle 2 together with the rotation mechanism 3. The motor 61 is fixed to the distal end 411a1 of the first slide arm portion 411a in the first support portion 41. An output shaft 61a of the motor 61 is disposed along the horizontal direction while perpendicularly intersecting the extension direction of the first support portion 41. In the present embodiment, the output shaft 61a of the motor 61 is disposed along the front-rear direction. The output shaft 61a of the motor 61 and the rotation mechanism 3 holding the nozzle 2 are connected to each other by the coupling portion 63. The coupling portion 63 is fixed to the output shaft 61a so as to be rotatable together with the output shaft 61a of the motor 61. The coupling portion 63 is fixed to the housing 31 of the rotation mechanism 3 so as to transmit output (power) from the output shaft 61a of the motor 61 to the rotation mechanism 3. The coupling portion 63 of the present embodiment has a substantially columnar shape. In the present embodiment, the output shaft 61a of the motor 61 corresponds to the swing fulcrum of the nozzle 2.

In the swing mechanism 6, when the output shaft 61a of the motor 61 rotates in one direction (in Fig. 12, clockwise), the nozzle 2 operates to be swung down from the upper side to the lower side. On the other hand, when the output shaft 61a of the motor 61 rotates in the opposite direction (in Fig. 12, counterclockwise), the nozzle 2 operates to be swung up from the lower side to the upper side. The swing mechanism 6 swings the nozzle 2 so as to alternately repeat the operation in which the nozzle 2 is swung down from the upper side to the lower side and the operation in which the nozzle 2 is swung up from the lower side to the upper side.

The rotation mechanism 3 is provided with the swing restricting portion 66 for restricting a range in which the nozzle 2 swings. The swing restricting portion 66 includes the plate-like rotating plate 62 fixed to the coupling portion 63 so as to be rotatable together with the coupling portion 63, and the locking portion 64 that is locked to the edge portions 62a and 62b of the rotating plate 62 to stop the rotation of the output shaft 61a. The locking portion 64 is a rod-like member, and is provided upright at a portion facing the rotation mechanism 3 in a portion of the arm portion 411 (first slide arm portion 411a) of the first support portion 41 at the distal end 411a1. That is, the rod-shaped locking portion 64 is disposed in parallel with the output shaft 61a of the motor 61. The height (length) of the locking portion 64 is adjusted so as to be able to be locked to a predetermined portion of the rotating plate 62.

When viewed in the axial direction of the output shaft 61a, the rotating plate 62 includes a portion extending outward from the coupling portion 63. For example, when the output shaft 61a illustrated in Fig. 12 rotates clockwise, the rotating plate 62 also rotates clockwise together with the output shaft 61a, and finally, the edge portion 62a of the rotating plate 62 comes into contact with the locking portion 64 in a downward manner from the upper side. When the edge portion 62a of the rotating plate 62 comes into contact with the locking portion 64 in this manner, the rotation of the output shaft 61a of the motor 61 is stopped, and the swinging of the nozzle 2 from the upper side to the lower side is also stopped. In the case of the present embodiment, when the rotating plate 62 is locked to the locking portion 64 with the edge portion 62a in contact, the nozzle 2 is stopped at a position indicated by reference numeral 2A on the lower side of Fig. 12. By locking the rotating plate 62 to the locking portion 64 in this manner, the position of the nozzle 2 is prevented from moving further backward than the position indicated by reference numeral 2A with the ejection port 2a of the nozzle 2 facing downward.

On the other hand, for example, when the output shaft 61a illustrated in Fig. 12 rotates counterclockwise, the rotating plate 62 also rotates counterclockwise together with the output shaft 61a, and finally, the other edge portion 62b of the rotating plate 62 comes into contact with the locking portion 64 in a downward manner from the lower side. When the edge portion 62b of the rotating plate 62 comes into contact with the locking portion 64 in this manner, the rotation of the output shaft 61a of the motor 61 is stopped, and the swinging of the nozzle 2 from the lower side to the upper side is also stopped. In the case of the present embodiment, when the rotating plate 62 is locked to the locking portion 64 with the other edge portion 62b in contact, the nozzle 2 is stopped at a position indicated by reference numeral 2B on the upper side of Fig. 12. By locking the rotating plate 62 to the locking portion 64 in this manner, the position of the nozzle 2 is prevented from moving further backward than the position indicated by reference numeral 2B with the ejection port 2a of the nozzle 2 facing upward.

The swing operation of the swing mechanism 6 is controlled by a control unit 76 of the swing mechanism 6 included in the control device 7. The swing position of the nozzle 2 is grasped using the output result by a proximity sensor 65 that detects the position of the rotating plate 62. As in the locking portion 64, the proximity sensor 65 is provided in a portion facing the rotation mechanism 3 in a portion of the arm portion 411 (first slide arm portion 411a) of the first support portion 41 at the distal end 411a1.

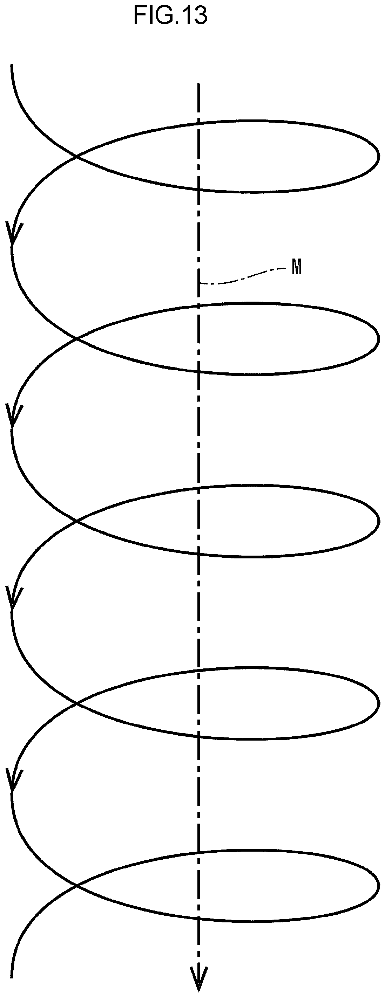

Fig. 13 is an explanatory view schematically illustrating the movement of the nozzle 2 in a case where the nozzle 2 is swung down from the upper side to the lower side by the swing mechanism 6 while the nozzle 2 is rotated by the rotation mechanism 3. When the nozzle 2 is swung down from the upper side to the lower side by the swing mechanism 6 as indicated by an arrow M of a one-dot chain line in Fig. 13, the nozzle 2 moves from the upper side to the lower side as a whole while drawing a spiral as illustrated in Fig. 13. Therefore, in this case, the liquid (cleaning water) ejected from the nozzle 2 advances toward the object while drawing a spiral from the upper side to the lower side. Contrary to this case, when the nozzle 2 is swung up from the lower side to the upper side by the swing mechanism 6, the nozzle 2 moves from the lower side to the upper side as a whole while drawing a spiral, and the liquid (cleaning water) ejected from the nozzle 2 moves from the lower side to the upper side while drawing a spiral.

As illustrated in Fig. 1, the liquid ejection apparatus 1 is disposed in front of multistage cage poultry house 100 as an object. The liquid ejection apparatus 1 includes a pair of the first support portions 41 (41A, 41B) on the left and right, and one nozzle 2 is attached to each of the first support portions 41 (41A, 41B). For example, the nozzle 2 supported by the first support portion 41 (41A) on left of the liquid ejection apparatus 1 is used to clean one multistage cage poultry house 100a disposed on the right side of Fig. 1. In addition, the first support portion 41 (41B) on the right side is used for cleaning the other multistage cage poultry house (not shown) disposed on right of the liquid ejection apparatus 1. Note that only one of the two nozzles 2 included in the liquid ejection apparatus 1 may be used as necessary, or the two nozzles 2 may be used simultaneously.

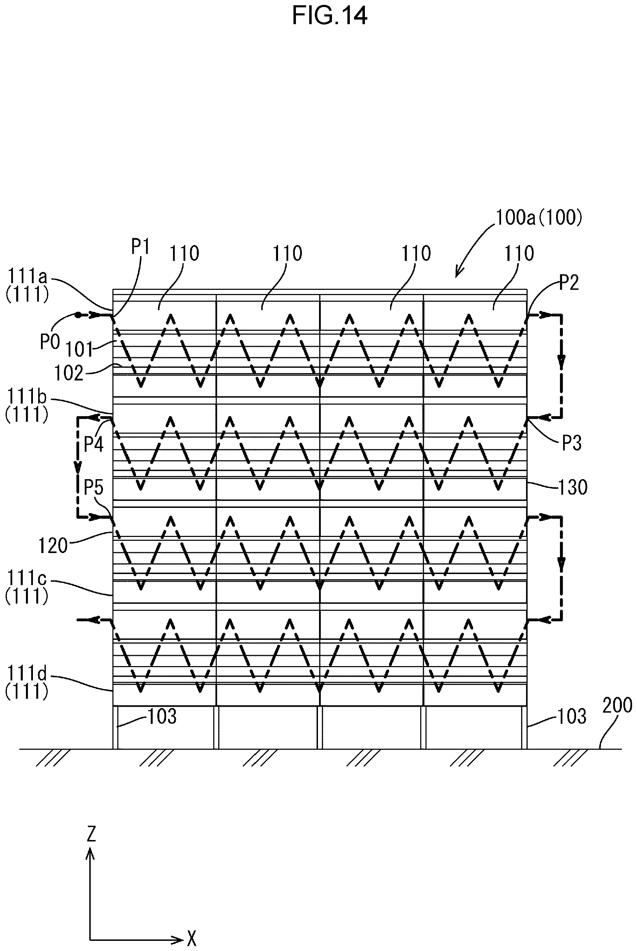

Next, with reference to Fig. 14, a description will be given of a stroke (path) of the nozzle 2 that moves based on a predetermined movement condition during cleaning of the multistage cage poultry house 100a. Fig. 14 is an explanatory view schematically illustrating a stroke of the nozzle 2 that moves based on the movement condition. The movement condition is stored in advance in a storage unit included in the control device 7, and when the multistage cage poultry house 100a is cleaned, the position of the nozzle 2 with respect to the multistage cage poultry house 100a is sequentially changed by appropriately operating the rotation mechanism 3, the support device 4(first support portion 41, second support portion 42), the self-propelled unit 5, the swing mechanism 6, and the like based on the movement condition. At the time of cleaning the multistage cage poultry house 100a, the nozzle 2 constantly ejects cleaning water while being rotated by the rotation mechanism 3. However, for convenience of description, in Fig. 14, the movement (stroke) in which the nozzle 2 is rotated by the rotation mechanism 3 is omitted.

As illustrated in Fig. 14, the multistage cage poultry house 100a (100) includes a plurality of cages (small rooms) 110 disposed in a matrix as a whole. Such a multistage cage poultry house 100 has a structure in which cage rows 111 including a plurality of cages 110 disposed in the lateral direction are stacked in four stages in the vertical direction. Here, for convenience of description, the cage rows 111 are referred to as a "first cage row 111a", a "second cage row 111b", a "third cage row 111c", and a "fourth cage row 111d" in order from the top. Fig. 14 shows the front of the multistage cage poultry house 100. In addition, the left side face 120 of the multistage cage poultry house 100 is disposed on the left side of Fig. 14, and the right side face 130 of the multistage cage poultry house 100 is disposed on the right side of Fig. 14.

The liquid ejection apparatus 1 of the present embodiment is configured to reciprocate so as to pass through in front of the front 100a1 of the multistage cage poultry house 100a in the left-right direction, and clean respective cage rows 111 in order from the top. Cleaning of an object such as the multistage cage poultry house 100a is usually performed in order from top to bottom in order to prevent dirt from adhering to the cleaned part.

In the state immediately before the start of cleaning, the liquid ejection apparatus 1 waits at the front 100a1 of the multistage cage poultry house 100a and in the vicinity of the left side face 120. Then, in the liquid ejection apparatus 1 in this state, the second support portion 42 of the support device 4 is operated to adjust the height position of the nozzle 2 supported by the first support portion 41 to be the start position P0 illustrated in Fig. 14.

Then, when the cleaning of the multistage cage poultry house 100a is started, the nozzle 2 is started from the height position P1 corresponding to the height of the first cage row 111a at the left end of the first cage row 111a. When started, the nozzle 2 ejects cleaning water toward the first cage row 111a while being rotated by the rotation mechanism 3, and moves in front of the first cage row 111a from the left side to the right side while repeating vertical swinging by the swing mechanism 6. A broken line in Fig. 14 schematically represents the movement of the nozzle 2.

At the time of such cleaning of the first cage row 111a, the self-propelled unit 5 is operated, and the liquid ejection apparatus 1 moves forward at a constant speed (that is, the apparatus travels from the left side to the right side). At this time, the rotation mechanism 3 is operated to rotate the nozzle 2 so that cleaning water ejected from the nozzle 2 advances while drawing a circle. At this time, the swing mechanism 6 operates to swing the nozzle 2 together with the rotation mechanism 3 so that the operation of swinging the nozzle 2 down from the upper side to the lower side and the operation of swinging the nozzle 2 up from the lower side to the upper side are alternately repeated. When the first cage row 111a is cleaned, the height position of the first support portion 41 is fixed by the second support portion 42 so as to be constant.

As described above, when the liquid ejection apparatus 1 passes through in front of the first cage row 111a, the self-propelled unit 5, the rotation mechanism 3, and the swing mechanism 6 are simultaneously operated and each of them performs a predetermined operation, so that the position of the nozzle 2 can be moved by a stroke (path) as indicated by a broken line in Fig. 14.

As described above, when the multistage cage poultry house 100a is cleaned, the rotation mechanism 3 and the swing mechanism 6 are simultaneously operated while the self-propelled unit 5 is operated, so that the cleaning water ejected from the nozzle 2 does not simply travel toward the object (multistage cage poultry house 100, first cage row 111a) while drawing a circle, but travels toward the object while alternately swinging in the vertical direction (that is, a spiral is drawn). Therefore, a range in which cleaning water ejected from the nozzle 2 reaches is remarkably wider than the conventional one. As a result, one cage row 111 (first cage row 111a) can be cleaned at a time only by the liquid ejection apparatus 1 passing through in front of the multistage cage poultry house 100a once.

For example, in a case where the self-propelled unit 5 and the rotation mechanism 3 are operated without operating the swing mechanism 6, a range where cleaning water ejected from the nozzle 2 reaches (a range of a height in the vertical direction) is about a half a range in the present embodiment described above. Therefore, in a case where the swing mechanism 6 is not operated, by dividing one cage row 111 into two portions in the vertical direction (the height direction), cleaning is performed on each portion (that is, one round trip in front of the multistage cage poultry house 100 is required).

Further, in the case of the present embodiment, cleaning water is ejected from the nozzle 2 at various angles by simultaneously operating the rotation mechanism 3 and the swing mechanism 6 while operating the self-propelled unit 5. Therefore, the cleaning water can be easily delivered to three-dimensionally complicated structures such as the feeder pan (feed gutter) 101 and the egg receiving portion 102 provided in the multistage cage poultry house 100a, and deep structural portions such as the back side of the cage.

Various conditions such as the traveling speed of the self-propelled unit 5, the rotation speed of the nozzle 2 by the rotation mechanism 3, the swing speed of the nozzle 2 by the swing mechanism 6, and the swing range of the nozzle 2 by the swing mechanism 6 are appropriately set according to the size and the like of the object.

As illustrated in Fig. 14, when the liquid ejection apparatus 1 passes through in front of the multistage cage poultry house 100a and the nozzle 2 reaches the height position P2 at the right end (right side face 130) of the first cage row 111a, the second support portion 42 of the support device 4 is operated to lower the position of the nozzle 2. Then, the position of the nozzle 2 is adjusted to the height position P3 corresponding to the height of the second cage row 111b. When the nozzle 2 reaches the height position P3 in this manner, cleaning of the second cage row 111b is started. Specifically, the nozzle 2 ejects cleaning water toward the second cage row 111b while being rotated by the rotation mechanism 3, and moves in front of the second cage row 111b from the right side to the left side while repeating vertical swinging by the swing mechanism 6.

At the time of such cleaning of the second cage row 111b, the self-propelled unit 5 operates, and the liquid ejection apparatus 1 retreats at a constant speed (that is, the apparatus travels from the right side to the left side). At this time, the rotation mechanism 3 is operated to rotate the nozzle 2 so that cleaning water ejected from the nozzle 2 advances while drawing a circle. At this time, the swing mechanism 6 operates to swing the nozzle 2 together with the rotation mechanism 3 so that the operation of swinging the nozzle 2 down from the upper side to the lower side and the operation of swinging the nozzle 2 up from the lower side to the upper side are alternately repeated. When the second cage row 111b is cleaned, the height position of the first support portion 41 is fixed by the second support portion 42 so as to be constant. As described above, when the liquid ejection apparatus 1 passes through in front of the second cage row 111b, the self-propelled unit 5, the rotation mechanism 3, and the swing mechanism 6 are simultaneously operated and each of them performs a predetermined operation, so that cleaning water can be ejected from the nozzle 2 toward the target object in a wide range while moving the position of the nozzle 2 in a stroke (path) as indicated by the broken line in Fig. 14.

Thereafter, when the nozzles 2 reach the height position P4 at the left end (left side face 120) of the second cage row 111b, the second support portion 42 of the support device 4 operates to lower the position of the nozzles 2. Then, the position of the nozzle 2 is adjusted to the height position P5 corresponding to the height of the third cage row 111c. When the nozzle 2 reaches the height position P5 in this manner, cleaning of the third cage row 111c is started. The cleaning of the third cage row 111c is basically the same as the cleaning of the first cage row 111a described above, although different in the height position of the nozzle 2. Then, after the cleaning of the third cage row 111c is completed, the height position of the nozzle 2 is appropriately adjusted, and then the cleaning of the fourth cage row 111d is performed under the conditions same as those at the time of cleaning the second cage row 111b.

The fact that the nozzle 2 has reached the right end (right side face 130) or the left end (left side face 120) of each cage row 111 can be grasped using, for example, a detection result by a detection sensor or the like provided in the self-propelled unit 5.

As described above, the multistage cage poultry house 100a can be cleaned using the liquid ejection apparatus 1. When cleaning of the multistage cage poultry house 100a is finished, the liquid ejection apparatus 1 is moved as appropriate for cleaning another multistage cage poultry houses 100, and the another multistage cage poultry house 100 is cleaned again in the same manner at the destination.

The liquid ejection apparatus 1 of the present embodiment can deliver cleaning water (liquid) ejected from the nozzle 2 to the multistage cage poultry house 100 as an object in a wide range. Therefore, the time to eject the liquid to the object such as the cleaning time can be significantly shortened, as compared with that in the related art.

### <Second embodiment>

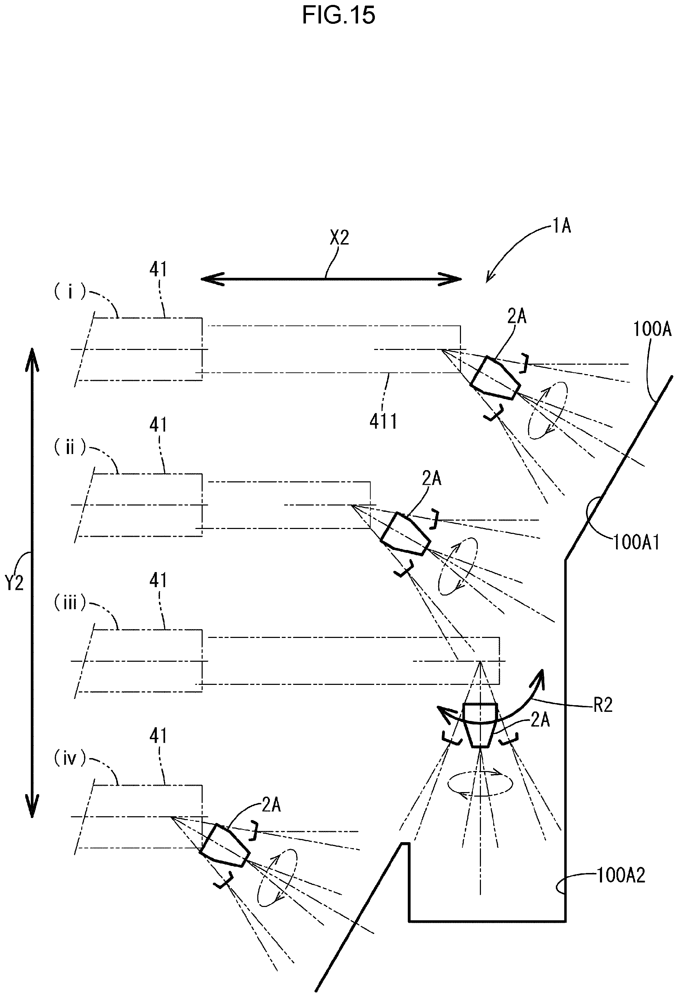

Next, a liquid ejection apparatus 1A according to the second embodiment of the present invention will be described with reference to Fig. 15. Fig. 15 is an explanatory diagram schematically illustrating the content of cleaning an object 100A using the liquid ejection apparatus 1A according to the second embodiment. As in the first embodiment, the liquid ejection apparatus 1A of the present embodiment is a self-propelled device (cleaning device) that ejects a cleaning liquid from a nozzle 2A to clean the object 100A. In the case of the present embodiment, as illustrated in Fig. 15, the object 100A includes an inclined face 100A1 inclined so as to raised from the lower side to the upper side and an accommodation portion 100A2 opened upward.

As in the first embodiment, the liquid ejection apparatus 1A includes a rotation mechanism that holds the nozzle 2A and rotates the nozzle 2A. The nozzle 2A of the present embodiment ejects cleaning water from the ejection port while rotating the cleaning water so as to draw a circle smaller than a circle by the rotation mechanism.

In addition, as in the first embodiment, the liquid ejection apparatus 1A of the present embodiment includes a support device including the first support portion 41 that is extendable and retractable in the horizontal direction and the second support portion that can raise and lower the first support portion 41 in the vertical direction. By extension and retraction of the first support portion 41, the distance between the nozzle 2A and the object 100A can be appropriately adjusted in the horizontal direction (arrow X2 in Fig. 15). In addition, the height position of the nozzle 2A can be appropriately adjusted in the vertical direction (arrow Y2 in Fig. 15) by raising and lowering the first support portion 41 by extension and retraction of the second support portion or the like.

In addition, as in the first embodiment, the liquid ejection apparatus 1A of the present embodiment includes a swing mechanism that swings the nozzle 2A together with the rotation mechanism so that the operation in which the nozzle 2A is swung down from the upper side to the lower side and the operation in which the nozzle 2A is swung up from the lower side to the upper side are alternately repeated. By the swing operation of the swing mechanism, the position of the nozzle 2A can be alternately moved in a direction of being swung down from the upper side to the lower side and in a direction of being swung up from the lower side to the upper side (arrow R2 in Fig. 15). The liquid ejection apparatus 1A of the present embodiment also includes a self-propelled unit similar to that of the first embodiment.

The liquid ejection apparatus 1A of the present embodiment can efficiently clean the object 100A by ejecting cleaning water from the nozzle 2A toward the object 100A while combining the respective operations of the rotation mechanism, the support device (first support portion, second support portion), the swing mechanism, and the like. Hereinafter, the operation of each component in the liquid ejection apparatus 1A will be briefly described. The nozzle 2A is constantly rotated by a rotation mechanism.

The cleaning of the object 100A in the present embodiment is sequentially performed from the upper side to the lower side in order to suppress adhesion of dirt to the cleaned portion. Here, first, in a state where the first support portion 41 is disposed at a height position indicated by reference sign (i), cleaning water is ejected from the nozzle 2A toward an inclined face 100A of the object 100A. The distance between the nozzle 2A and the inclined face 100A is maintained within a predetermined range by appropriately adjusting the length of the first support portion 41 that supports the nozzle 2. Thereafter, as the cleaning progresses, the second support portion operates to adjust the height position of the first support portion 41 so that the height position of the nozzle 2A gradually decreases. When the height position of the nozzle 2A is lowered, the length of the arm portion 411 of the first support portion 41 is adjusted to gradually decrease so that the distance between the nozzle 2A and the inclined face 100A is maintained within a predetermined range. For example, when first support portion 41 is lowered to the height position indicated by reference sign (ii), the length of the arm portion 411 of the first support portion 41 is shortened, as compared with that in the case indicated by reference sign (i).

When first support portion 41 is further lowered by the operation of the second support portion and the height position of the first support portion 41 reaches the height position indicated by reference sign (iii), the arm portion 411 of the first support portion 41 is extended to increase the length of the arm portion 411. By increasing the length of the arm portion 411 of the first support portion 41 in this manner, it is possible to reliably eject cleaning water from the nozzle 2A toward the inside of the accommodation portion 100A2 while disposing the nozzle 2A above the accommodation portion 100A2 disposed below the inclined face 100A. At this time, the nozzle 2A ejects cleaning water toward the bottom face and the inner wall face of the accommodation portion 100A2 while being swung by the swing mechanism within a predetermined swing range.

After the cleaning of the accommodation portion 100A2, the second support portion operates to lower the first support portion 41, and the first support portion 41 operates to gradually shorten the length of the arm portion 411 of the first support portion 41, so that the distance between the nozzle 2A and the inclined face 100A1 is maintained within a predetermined range. In such a state, cleaning water is ejected from the nozzle 2A to the inclined face 100A1 below the accommodation portion 100A2, and the inclined face 100A1 is cleaned.

As described above, in the liquid ejection apparatus 1A of the present embodiment, by combining the respective operations of the rotation mechanism, the support device (first support portion, second support portion), the swing mechanism, and the like, cleaning water ejected from the nozzle 2A can be evenly spread to the object 100A having a complicated structure. As in the present embodiment, by operating the first support portion 41 together with the rotation mechanism, the cleaning water can be reliably ejected toward the target object 100A while keeping the distance between the target object 100A and the nozzle 2 within a predetermined range. In the present embodiment, in particular, in the extension direction of the first support portion 41 (direction in which the liquid ejection apparatus 1A and the object 100A face each other), the cleaning water ejected from the nozzle 2A can reach a wide range.

### <Third embodiment>

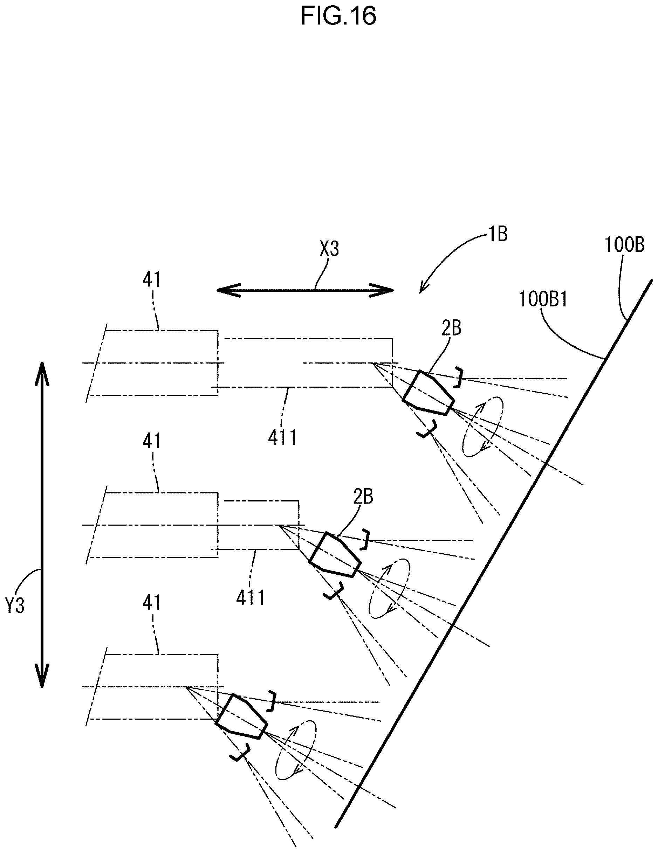

Next, a liquid ejection apparatus 1B according to the third embodiment of the present invention will be described with reference to Fig. 16. Fig. 16 is an explanatory diagram schematically illustrating the content of cleaning an object 100B using the liquid ejection apparatus 1B according to the third embodiment. As in the first embodiment, the liquid ejection apparatus 1B of the present embodiment is a self-propelled device (cleaning device) that ejects the cleaning liquid from the nozzle 2B to clean the object 100B. In the present embodiment, as illustrated in Fig. 16, the object 100B includes an inclined face 100B1 inclined so as to be raised from the lower side to the upper side.

As in the first embodiment, the liquid ejection apparatus 1B includes a rotation mechanism that holds a nozzle 2B and rotates the nozzle 2B. As in the second embodiment, the nozzle 2B of the present embodiment also ejects cleaning water from the ejection port at the distal end while rotating the cleaning water so as to draw a circle smaller than a circle by the rotation mechanism.

In addition, as in the first embodiment, the liquid ejection apparatus 1B according to the present embodiment includes a support device including a first support portion 41 that supports the rotation mechanism and is extendable and retractable in the horizontal direction so as to be movable in a direction in which the nozzle 2B approaches the object 100B and a direction in which the nozzle 2B moves away from the object 100B and a second support portion that can raise and lower the first support portion 41 in the vertical direction. By extension and retraction of the first support portion 41, the distance between the nozzle 2B and the object 100B can be appropriately adjusted in the horizontal direction (arrow X3 in Fig. 16). In addition, the height position of the nozzle 2B can be appropriately adjusted in the vertical direction (arrow Y3 in Fig. 16) by raising and lowering the first support portion 41 by extension and retraction of the second support portion or the like. The liquid ejection apparatus 1B of the present embodiment also includes a self-propelled unit similar to that of the first embodiment. The second support portion is erected on the self-propelled unit, and supports the first support portion so that the first support portion 41 is capable of being raised and lowered in the vertical direction.

The liquid ejection apparatus 1B of the present embodiment can efficiently clean the object 100B by ejecting cleaning water from the nozzle 2B to the object 100B while combining the respective operations of the rotation mechanism, the support device (first support portion, second support portion), and the like. The nozzle 2B is constantly rotated by the rotation mechanism.

The cleaning of the object 100B is usually performed in order from the upper side to the lower side. In the case of the present embodiment, the height position of the nozzle 2B is gradually changed from the upper side to the lower side by the second support portion, the length of the first support portion 41 (the length of the arm portion 411) is appropriately adjusted, and while maintaining the distance between the nozzle 2B and the inclined face 100B1 of the object 100B within a predetermined range, the cleaning water is ejected from the nozzle 2B toward the object 100B (inclined face 100B1).

As described above, in the liquid ejection apparatus 1B of the present embodiment, by combining the respective operations of the rotation mechanism, the support device (first support portion, second support portion), and the like, the cleaning water can be ejected from the nozzle 2B to the object 100B to uniformly spread the cleaning water to the object. In the present embodiment, in particular, in the extension direction of the first support portion 41 (direction in which the liquid ejection apparatus 1B and the object 100B face each other), the cleaning water ejected from the nozzle 2B can reach a wide range.

### <Fourth embodiment>

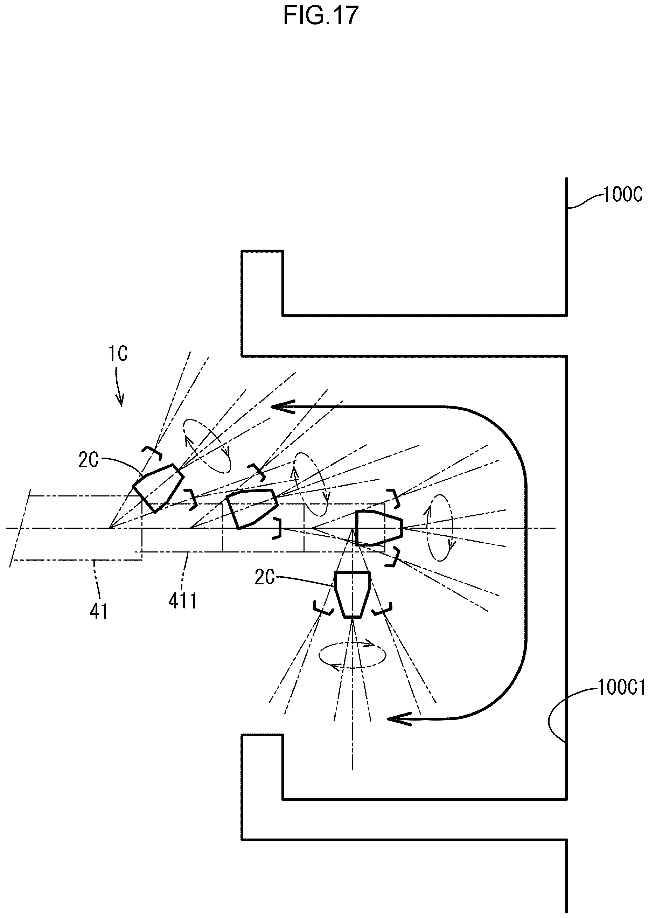

Next, a liquid ejection apparatus 1C according to the fourth embodiment of the present invention will be described with reference to Fig. 17. Fig. 17 is an explanatory diagram schematically illustrating the content of cleaning an object 100C using the liquid ejection apparatus 1C according to the fourth embodiment. As in the first embodiment, the liquid ejection apparatus 1C of the present embodiment is a self-propelled device (cleaning device) that ejects the cleaning liquid from a nozzle 2C to clean the object 100C. In the case of the present embodiment, as illustrated in Fig. 17, the object 100C is formed by stacking the accommodation portions 100C1 in a plurality of stages, each accommodation portion having a depth and being opened forward.

As in the first embodiment, the self-propelled liquid ejection apparatus 1C includes a rotation mechanism that holds the nozzle 2C and rotates the nozzle 2C. As in the second embodiment, the nozzle 2C of the present embodiment also ejects cleaning water from the ejection port while rotating the cleaning water so as to draw a circle smaller than a circle by the rotation mechanism.

In addition, as in the first embodiment, the self-propelled liquid ejection apparatus 1C of the present embodiment includes a support device including the first support portion 41 that is extendable and retractable in the horizontal direction and the second support portion that can raise and lower the first support portion 41 in the vertical direction. The distance between the nozzle 2C and the object 100C can be appropriately adjusted in the horizontal direction by extension and retraction of the first support portion 41. In addition, the height position of the nozzle 2C can be appropriately adjusted in the vertical direction by raising and lowering the first support portion 41 by extension and retraction of the second support portion or the like.

As in the first embodiment, the liquid ejection apparatus 1C of the present embodiment includes a swing mechanism capable of swinging the nozzle 2C together with the rotation mechanism 3 in a direction in which the nozzle 2C is swung down from the upper side to the lower side and in a direction in which the nozzle 2C is swung up from the lower side to the upper side. The swing mechanism swings the nozzle 2C together with the rotation mechanism so that an operation in which the nozzle 2C is swung down from the upper side to the lower side and an operation in which the nozzle 2C is swung up from the lower side to the upper side are alternately repeated. The liquid ejection apparatus 1C of the present embodiment also includes a self-propelled unit similar to that of the first embodiment. The nozzle 2C is constantly rotated by the rotation mechanism.

In the case of the present embodiment, the nozzle 2C is swung in the direction in which the nozzle 2C is swung down from the upper side to the lower side and the direction in which the nozzle 2C is swung up from the lower side to the upper side by the swing mechanism in accordance with the operation in which the nozzle 2C gradually approaches the object 100C and enters the accommodation portion 100C1 and the operation in which the nozzle 2C gradually moves away from the object 100C and moves out of the accommodation portion 100C1. In the present embodiment, when one accommodation portion 100C1 is cleaned, the height position of the first support portion is maintained at a constant height position by the second support portion. After cleaning the accommodation portion 100C1, another accommodation portion below the accommodation portion 100C1 is cleaned in the same manner.

As described above, in the liquid ejection apparatus 1C of the present embodiment, by combining the respective operations of the rotation mechanism, the support device (first support portion, second support portion), the swing mechanism, and the like, cleaning water ejected from the nozzle 2C can be evenly spread to the object 100C having a complicated structure. By operating the first support portion 41 and the swing mechanism together with the rotation mechanism as in the present embodiment, cleaning water can be reliably ejected toward a structure (ceiling, floor, peripheral wall, and the like) such as an accommodation portion having a depth.

### <Other embodiments>

The present invention is not limited to the embodiments described with reference to the above description and drawings, and for example, the following embodiments are also included in the technical scope of the present invention.
(1) In the first embodiment and the like, the swing mechanism swings the nozzle in a direction in which the nozzle is swung down from the upper side to the lower side and in a direction in which the nozzle is swung up from the lower side to the upper side, but the present invention is not limited thereto, and for example, in another embodiment, the swing mechanism may swing the nozzle in a direction in which the nozzle is swung down while being inclined obliquely from the upper side to the lower side and in a direction in which the nozzle is swung up while being inclined obliquely from the lower side to the upper side. Furthermore, in another embodiment, the nozzle may be swung to reciprocate left and right so as to draw an arc in the horizontal direction with the rotation mechanism as a fulcrum.
(2) The liquid ejection apparatus according to the first embodiment or the like ejects a cleaning liquid such as cleaning water from a nozzle toward an object to clean the object, but the present invention is not limited thereto. For example, in another embodiment, a disinfection liquid may be ejected as a liquid from the nozzle toward the object to disinfect the object.
(3) The object to which the liquid is ejected by the liquid ejection apparatus is not limited to a barn such as a poultry house as long as an object of the present invention is not impaired, and may be, for example, a slaughtering facility, a factory facility, a warehouse, a store, or the like.
(4) In the liquid ejection apparatus according to the first embodiment and the like, one nozzle is provided for one first support portion, but, in another embodiment, for example, a plurality of nozzles may be provided for one first support portion as long as an object of the present invention is not impaired.
(5) The control device of the liquid ejection apparatus according to the first embodiment or the like may include a communication unit (communication interface). The communication unit has a function of transmitting information to another device and a function of receiving information from another device. The communication unit may have a wireless communication function or a wired communication function. The communication unit may communicate with another device via a communication path by using wireless communication or wired communication (for example, WiFi (registered trademark) or the like). The communication path is, for example, a network such as a local area network (LAN), the Internet, or the like. The communication unit may communicate with another device without using a communication path by using near field communication or the like. The near field communication is, for example, Bluetooth (registered trademark), radio frequency identifier (RFID), NFC, or the like. In another embodiment, for example, the operator may operate a terminal device (for example, a tablet terminal or the like) separate from the liquid ejection apparatus 1 and use a communication function between the terminal device and the control device to issue an instruction from the operator to the liquid ejection apparatus 1.

### REFERENCE SIGNS LIST

- 1: liquid ejection apparatus
- 2: nozzle
- 3: rotation mechanism
- 4: support device
- 41: first support portion
- 42: second support portion
- 5: self-propelled unit
- 6: swing mechanism
- 7: control device
- 100: object (multistage cage poultry house)

## Claims

1. A liquid ejection apparatus comprising:
a nozzle that ejects a liquid toward an object;
a rotation mechanism that holds the nozzle and rotates the nozzle such that the liquid ejected from the nozzle advances in a circular motion;
a support device that supports the rotation mechanism;
a self-propelled unit on which the support device is mounted; and
a swing mechanism disposed between the rotation mechanism and the support device and being capable of swinging the nozzle with the rotation mechanism as a fulcrum.

2. The liquid ejection apparatus according to claim 1, wherein the swing mechanism swings the nozzle together with the rotation mechanism such that the nozzle moves down from an upper side to a lower side and moves up from the lower side to the upper side repeatedly.

3. The liquid ejection apparatus according to claim 1 or 2, wherein the support device includes a first support portion that supports the rotation mechanism via the swing mechanism and is extendable and retractable in a horizontal direction so as to be movable in a direction in which the nozzle approaches the object and in a direction in which the nozzle moves away from the object.

4. The liquid ejection apparatus according to claim 3, wherein the support device includes a second support portion that extends upward from the self-propelled unit and supports the first support portion such that the first support portion is capable of moving up and down in a vertical direction.

5. A liquid ejection apparatus comprising:
a nozzle that ejects a liquid toward an object;
a rotation mechanism that holds the nozzle and rotates the nozzle such that the liquid ejected from the nozzle advances in a circular motion;
a support device that supports the rotation mechanism;
a self-propelled unit on which the support device is mounted, wherein
the support device includes a first support portion that supports the rotation mechanism and is extendable and retractable in a horizontal direction so as to be movable in a direction in which the nozzle approaches the object and in a direction in which the nozzle moves away from the object.

6. The liquid ejection apparatus according to claim 5, wherein the support device includes a second support portion that extends upward from the self-propelled unit and supports the first support portion such that the first support portion is capable of moving up and down in a vertical direction.

7. A liquid ejection apparatus comprising:
a nozzle that ejects a liquid toward an object;
a rotation mechanism that holds the nozzle and rotates the nozzle such that the liquid ejected from the nozzle advances in a circular motion;
a support device that supports the rotation mechanism; and
a self-propelled unit on which the support device is mounted, wherein
the support device extends upward from the self-propelled unit and supports the rotation mechanism such that the nozzle held by the rotation mechanism is capable of moving up and down in a vertical direction.
